(19) Europäisches Patentamt
European Patent Office
Office européen des brevets

(11) Publication number: 0 055 061
A1

# (12) EUROPEAN PATENT APPLICATION

(21) Application number: **81305863.3**

(22) Date of filing: **14.12.81**

(51) Int. Cl.$^3$: **A 01 N 43/42**

(30) Priority: **23.12.80 US 219504**

(43) Date of publication of application: **30.06.82**
**Bulletin 82/26**

(84) Designated Contracting States: **DE FR GB IT**

(71) Applicant: **UNION CARBIDE CORPORATION, Old Ridgebury Road, Danbury Connecticut 06817 (US)**

(72) Inventor: **Fritz, Charles David, 206 Franklin Court, North Wales Pennsylvania 19454 (US)**
Inventor: **Cooke, Anson Richard, 611 Sourwood Drive, Hatfield Pennsylvania 19440 (US)**

(74) Representative: **Baverstock, Michael George Douglas et al, BOULT, WADE & TENNANT 27 Furnival Street, London, EC4A 1PQ (GB)**

(54) **Male gametocide method in small grain plants, compound, composition and hybridization method.**

(57) A method for producing a male gametocide effect in small grain plant which employs 2-substituted cinchoninic acid compound in an effective amount, and which comprises applying to the plant the said compound at a time when the inflorescence primordium is present.

The compounds and compositions containing these compounds for use in the method are claimed, as well as a hybridization method employing such a male gametocide effect.

EP 0 055 061 A1

0055061

MALE GAMETOCIDE METHOD IN SMALL GRAIN PLANTS, COMPOUND, COMPOSITION AND HYBRIDIZATION METHOD

This invention relates generally to a method of producing a male gametocide effect in small grain plants, and, more specifically to a method of applying a 2-substituted cinchoninic acid compound to the plant at a time when the inflorescence primordium is present in the plant.

The male gametocide effect of 2-substituted cinchoninic acid compounds in certain small grains is known in the art. For example, U.S. Patent 4,009,020 discloses a method of producing male sterility in wheat by applying 2-trifluoromethyl-4-quinoline carboxylic acid to wheat, where the timing of application of the compound is based upon the leaf-stage or joint-stage development of the wheat.

The use of leaf-stage or joint-stage measurement, as disclosed in the above-mentioned patent, suffers from the limitation that such plant-stage development is

BAD ORIGINAL

highly dependent upon environmental factors such as soil condition, soil moisture, climate, and the like. Therefore, it would be desirable to have a new method of applying such compounds that is minimally dependent upon such environmental factors.

Small grain plants generally do not cross-fertilize, but rather self-fertilize. A highly effective male gametocide method is particularly desirable for such small grain plants, since efficient cross-pollination and fertilization to produce new hydrids of small grain plants is encouraged by the prevention of self-pollination and fertilization.

It is an object of the present invention to produce a highly effective male gametocide method for use in small grain plants that is minimally dependent upon environmental factors such as soil conditions, climate, and the like.

This and other objects of the invention will be apparent upon a reading of the following detailed specification.

This invention provides a method for producing a male gametocide effect in a small grain plant. The method comprises applying to said plant, in an effective amount, at a time when the inflorescence primordium is present with respect to the plant being treated, of a

compound selected from:

(A) a compound of the general formula:

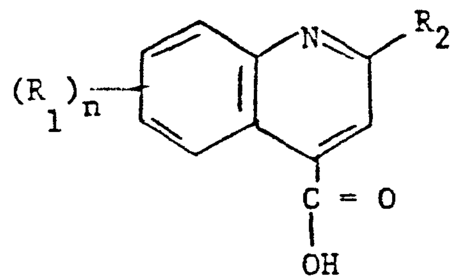

wherein $R_1$ is selected from halogen and alkyl, aryl and alkoxy radicals having from 1 to 10 carbon atoms, n is an integer having a value of from 0 to 2, and $R_2$ is selected from:

a. chlorine and

b. trifluoromethyl; and

(B) agriculturally-acceptable functional derivatives of (A) selected from:

a. alkaline earth metal salts,

b. mono-, di- or tri- alkylamine salts of 1 to 2 carbon atoms,

c. mono-, di- or tri- alkanolamine salts of 1 to 3 carbon atoms,

d. C-1 to C-4 alkyl esters, and

e. amides, either unsubstituted or substituted with one or two C-1 to C-4 alkyl groups.

The present invention also relates to the compounds per se and their compositions for use in the present method, as well as to a hybridization method using such a male gametocide effect.

The 2-substituted cinchoninic acid compounds of the present invention are known compounds. Such compounds can be prepared in accordance with the methods given in U.S. Patent 4,009,020, incorporated herein by reference, or they can be prepared in accordance with the procedure disclosed by B. M. Pinder and A. Burger (J. Med. Chem., 11,pp. 267-269 (1968)), condensation of aniline, or a substituted aniline, with ethyl-4, 4, 4-trifluoracetoacetate in the presence of polyphosphoric acid to produce 2-trifluoromethyl-4-hydroxyquinoline from which the desired 2-trifluoromethyl cinchoninic acid can be obtained.

The preferred cinchoninic acid used in the present invention is 2-trifluoromethyl cinchoninic acid, preferably in the form of its ethanolamine salt.

The method of the present invention is useful in treating any small grain plant, such as, for example, wheat, barley, oats, rye, rice, and the like.

The cinchoninic acid compound useful in the present invention is applied to the small grain plant at a time when the primordium inflorescence is present in

the plant. This time is after flower initiation but before the flower primordia are differentiated in the plant. The initiation of the inflorescence primordium is primarily a function of the "photo period" (the length of the night time) and is minimally influenced by other environmental factors.

Preferably, the inflorescence primordium is of a length between about 0.2 and 2 cm., more preferably between about 0.5 and about 1.5 cm., most preferably between about 0.6 and about 0.8 cm., wherein such length is measured from the first constricted area below the base of the inflorescence primordium.

The 2-substituted cinchonicic acid compound useful in the present invention is generally employed at a rate of about 0.1 to about 10 lbs./per acre. When the 2-substituted cinchoninic acid compound is a 2-chloro cinchoninic acid compound, an application rate of from about 1 to about 2 lbs. per acre is preferred. When the 2-substituted cinchoninic acid compound is a 2-trifluoromethyl cinchoninic acid compound, an application rate of about 1/4 to about 1 lbs. per acre is preferred (more preferably 1/2 to 3/4 lbs. per acre).

The method of the present invention is not subject to any narrow temperature criticality. Rather, the method is useful at any ambient temperature at which the small

grain plant crops can be grown.

Although the active compounds used in the method of this invention may, in some instances, be applied directly - in undiluted form - to the plant to be treated, it is much more usual for the active compounds to be formed into a composition with a suitable carrier. By the term "suitable" is meant that the carrier is chosen having regard to the active compound employed and the plant being treated, so that it will not have any deleterious effect upon the method of the invention or the results obtained thereby.

Depending on how the composition is to be applied, the carrier could be a solid (such as talc or vermiculite) or a liquid (such as water or other solvent) and it is believed to be within the competence of one skilled in the art to choose the appropriate carrier for a particular compound and a particular application.

It is frequently most convenient and economic if the carrier used is water, and the composition is in the form of an aqueous solution. The compounds used in the method of the present invention are, however, soluble to varying degrees in water. Therefore, as appropriate, they can be formed into aqueous solutions composed wholly or partially of water. Preferred solutions include those formed with water and, for

example, acetone or methyl ethyl ketone, although practically any liquid solvent may be used, providing an effective growth-regulating mixture can be formed. Where any particular compound of the invention has a limited solubility, it may be solubilized by the use of co-solvents and the like. When applied in the form of an aqueous solution, the total volume of solution applied will generally range from about 1 to about 150 (preferably from about 1 to about 50) gal./acre.

Although the preferred method of application of compounds used in the present invention is to apply it directly to the foliage and stems of the plant, it has been found that the compounds may also be applied to the soil in which the plants are growing and that when applied indirectly in that manner the compound will be root absorbed to a sufficient extent to result in plant responses in accordance with this invention.

Example 1 - Greenhouse Test

A greenhouse test was conducted to determine the relationship between the inflorescence primordium length in "Olaf" spring wheat at the time of application of a solution of trifluoromethylcinchoninic acid and the resulting percent male sterility of the wheat. The trifluoromethylcinchoninic acid was applied as the ethanolamine salt to wheat planted in pots of sterilized soil by spraying at a rate of 0.5 lbs. per acre in an aqueous solution containing 0.1% v./v of polyethylene glycol monooleate surfactant.

Five replications were made using one plant per pot and untreated check plants were used as a basis for comparison.

The percent male sterility of the wheat plants was measured after treating the plants at inflorescence primordium lengths of 0.4 cm., 0.5 cm., or 1.3 cm., providing percent sterility responses of 65 percent, 100 percent and 81 percent, respectively. Thus, plant treatment at an inflorescence primordium length of 0.5 cm. provided maximum percent sterility in the greenhouse.

A repeat test was conducted using 0.75 lbs./acre of trifluoromethylcinchoninic acid as the ethanolamine salt on "Olaft" spring water wheat to provide sterility of 100 percent of an inflorescence primordium length of 0.6 cm.

BAD ORIGINAL

Example 2 - Field Test

A field test was conducted to show the superiority of using the inflorescence primordium length measurement as opposed to the prior art method of "leaf stage" measurement to determine the timing of applying of trifluoromethylcinhoninic acid as the ethanolamine salt "Arthur" winter wheat in the field by spraying at 0.5 lbs. per acre of said acid.

The results, as presented in Table I which follows, indicate that at a given leaf stage of development (5 leaf), the inflorescence primordium length can vary in the wheat from 0.4 cm. to 1.4 cm. Measurement of the inflorescence primordium length provided a basis for maximizing the percent male sterility in the plant (100 percent sterility at 0.8 cm. length), whereas leaf stage development provided no such basis.

Table I - "Arthur" Winter Wheat

| Run # | Rate of Application of Trifluoromethyl cinchoninic Acid (lbs./ Acre) | Leaf Stage at Time of Acid Application | Influorescence Primordium Length at Time of Acid Application (cm.) | Percent Male Sterility |
|---|---|---|---|---|
| 1 | 0.5 | 5 | 0.4 | 81 |
| 2 | 0.5 | 5 | 0.8 | 100 |
| 3 | 0.5 | 5 | 1.4 | 67 |

BAD ORIGINAL

CLAIMS:

1. A method for producing a male gametocide effect in a small grain plant which comprises applying directly or indirectly to the plant an effective amount, at the time when the inflorescence primordium is present with respect to the plant being treated, of a compound selected from:

(A) a compound of the general formula:

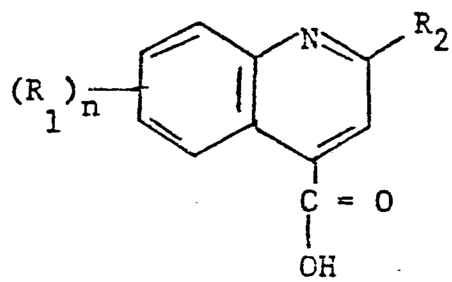

wherein $R_1$ is selected from halogen and alkyl, aryl and alkoxy radicals having from 1 to 10 carbon atoms, n is an integer having a value of from 0 to 2, and $R_2$ is selected from:

a. chlorine and

b. trifluoromethyl; and

(B) an agriculturally-acceptable functional derivative of (A) selected from:

a. alkaline earth metal salts,

b. mono-, di- or tri- alkylamine salts of 1 to 2 carbon atoms,

c. mono- di- or tri- alkanolamine salts of 1 to 3 carbon atoms,

d. C-1 to C-4 alkyl esters, and

e. amides, either unsubstituted or substituted with one or two C-1 to C-4 alkyl groups.

2. A method as claimed in claim 1 wherein the length of the inflorescence primordium is between 0.2 and 2 cm.

3. A method as claimed in claim 2 wherein the length is between 0.5 and 1.5 cm.

4. A method as claimed in claim 3 wherein the legnth is between 0.6 and 0.8 cm.

5. A method as claimed in any one of the preceding claims wherein small grain is selected from wheat, barley, oats, rye and rice.

6. A method as claimed in any one of the preceding claims wherein the compound is the ethanolamine salt of

2-trifluoromethylcinchoninic acid.

7. A compound selected from (A) or (B) as defined in claim 1 for use in producing a male gametocide effect in a small grain plant at the time when the inflorescence primordium is present with respect to the plant being treated.

8. The ethanolamine salt of 2-trifluoromethylcinchoninic acid for use in producing a male gametocide effect in a small grain plant at the time when the inflorescence primordium is present with respect to the plant being treated.

9. A composition suitable for use in producing a male gametocide effect in a small grain plant at the time when the inflorescence primordium is present with respect to the plant being treated, which composition comprises a compound selected from (A) or (B) as defined in claim 1 or claim 6, and a suitable carrier.

10. A method of producing a hybrid of a small grain plant which comprises producing a male gametocide effect in said plant by a method as claimed in any one of claims 1 to 6, and then cross-pollinating said

plant with a second plant and thereby fertilizing said plant to produce a hybrid.

11. A small grain plant when treated in accordance with a method as claimed in any one of claims 1 to 6, or a hybrid thereof.

European Patent Office

# EUROPEAN SEARCH REPORT

0055061

Application number

EP 81 30 5863

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| D | US - A - 4 009 020 (G.R. STARKE et al.) | | A 01 N 43/42 |
| X | * Columns 1-7 * | 7,8,9 | |
| Y | * Column 20, evaluation 69; claims 13-18 * | 1-6,10 11 | |
| | -- | | |
| Y | US - A - 4 051 142 (G.R. CARLSON) | | |
| | * Column 1, lines 4-39; column 11, lines 54-66 * | 1-6,10 11 | |
| | ---- | | |

TECHNICAL FIELDS SEARCHED (Int.Cl. 3)

A 01 N 43/42

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| The Hague | 24-03-1982 | DECORTE |